# EUROPEAN PATENT APPLICATION

(11) **EP 1 271 026 A1**
(43) Date of publication of application: **02.01.2003**
(21) Application number: 02012343.6
(22) Date of filing: 05.06.2002
(51) Int. Cl.: F16K 17/10, B60H 1/00

(54) **Automatic valve with pressure dependent variable flow rate**

(30) Priority: 29.06.2001 IT BO20010059
(71) Applicant: PAIOLI S.p.A., 40019 S. Agata Bolognese (Bologna) (IT)
(72) Inventor: Gnudi, Antonio, 40139 Bologna (IT)
(74) Representative: Modiano, Guido, Dr.-Ing.

(57) **Abstract**

An automatic valve with pressure-dependent variable flow-rate, particularly for feeding heat exchangers for vehicle climate control systems, which comprises: an elongated tubular body (1), in which one end is provided with a port (3) for connection to a duct for feeding pressurized fluid and has an outlet; a flow control element (8), which is mounted so that it can slide in the body in contrast with elastic means (11) that are suitable to push the contoured head (16) of the flow control element (8) into a configuration for closing the port (3) of the duct; at least one pin (18) , which is mounted so as to slide in contrast with elastic means (19) in a corresponding front longitudinal hole (20) of the flow control element (8) that is connected to a radial hole (21) that lies to the rear of the contoured head; the elastic means being suitable to open, as the pressure increases, first the hole (20) and then the duct.

## Description

The present invention relates to an automatic valve with pressure-dependent variable flow-rate, particularly for feeding heat exchangers for vehicle climate control systems.

In the particular field of heat exchangers for vehicle climate control systems, automatic valves for fluids are known which are mounted so as to control a duct for feeding a fluid under pressure that arrives from a source of heating or cooling liquid and allow the flow of a greater amount of liquid as the feed pressure increases.

Known valves have a considerable variety of response in terms of values of the flow of liquid between high and low values of the operating pressure, in that there is no constancy between the increase in the pressure value and the increase in fluid flow-rate. It has been observed that if there is, for example, a considerable difference between the maximum and minimum values of the pressure of the fluid there is no proportionality between the maximum and minimum operating values. In practice, if there is proportionality between the increase in pressure and the increase in flow at low pressures, this proportionality does not occur at high pressures, and vice versa if there is proportionality between the pressure and the flow at high pressures, there is no such proportionality at low pressures.

Moreover, in this particular field, the valve must be compact and for safety reasons must operate mechanically and without requiring electrical or electromechanical parts.

The aim of the present invention is to obviate the mentioned drawbacks, by providing an automatic valve whose aperture varies according to the variation of the pressure generated by the variable flow-rate feeder pump, particularly for feeding heat exchangers for vehicle climate control systems and the motor cooling radiator itself, which keeps substantially constant at high and low pressures the ratio between the values of the pressure and the values of the flow of fluid.

Within this aim, an object of the present invention is to provide a structure that is simple, relatively easy to provide in practice, safe in use, effective in operation, and relatively low in cost.

This aim and this and other objects that will become better apparent hereinafter are achieved by an automatic valve with pressure-dependent variable flow-rate, particularly for feeding heat exchangers for vehicle climate control systems, characterized in that it comprises: an elongated tubular body, in which one end is provided with a port for connection to a duct for feeding pressurized fluid and has an outlet; a flow control element, which is mounted so that it can slide in said body in contrast with elastic means that are suitable to push the contoured head of the flow control element into a configuration for closing the port of said duct; at least one pin, which is mounted so as to slide in contrast with elastic means in a corresponding front longitudinal hole of said flow control element that is connected to a radial hole that lies to the rear of said contoured head; said elastic means being suitable to open, as the pressure increases, first the hole and then the duct.

Further characteristics and advantages will become better apparent from the following detailed description of a preferred but not exclusive embodiment of an automatic valve with pressure-dependent variable flow-rate, particularly for feeding heat exchangers for vehicle climate control systems, according to the present invention, illustrated only by way of non-limitative example in the accompanying drawings, wherein:

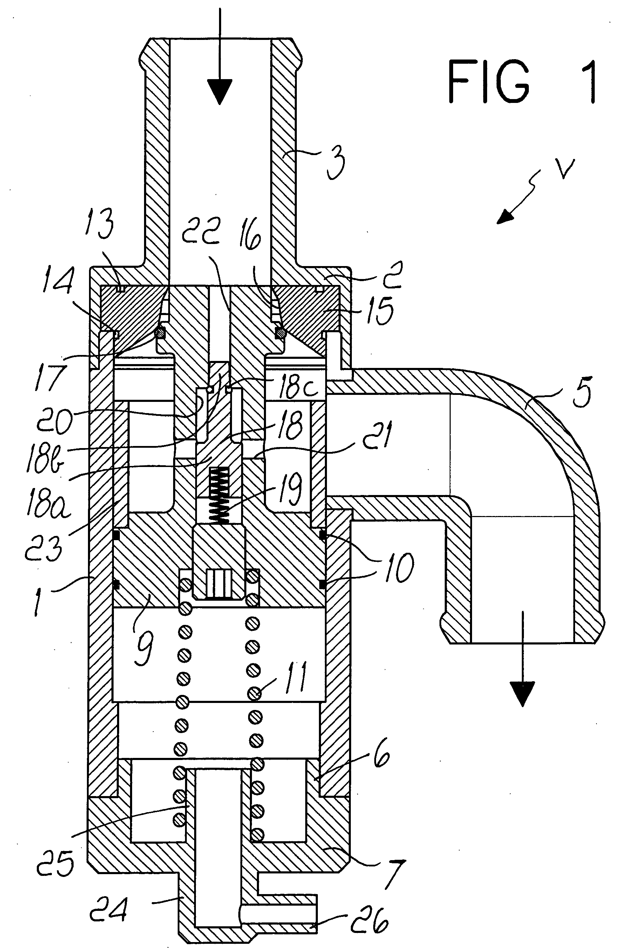

Figures 1 and 2 are sectional side views of an automatic valve with pressure-dependent variable flow-rate, particularly for feeding heat exchangers for vehicle climate control systems, according to the present invention, with the flow control element respectively in a closed configuration and in an open configuration;

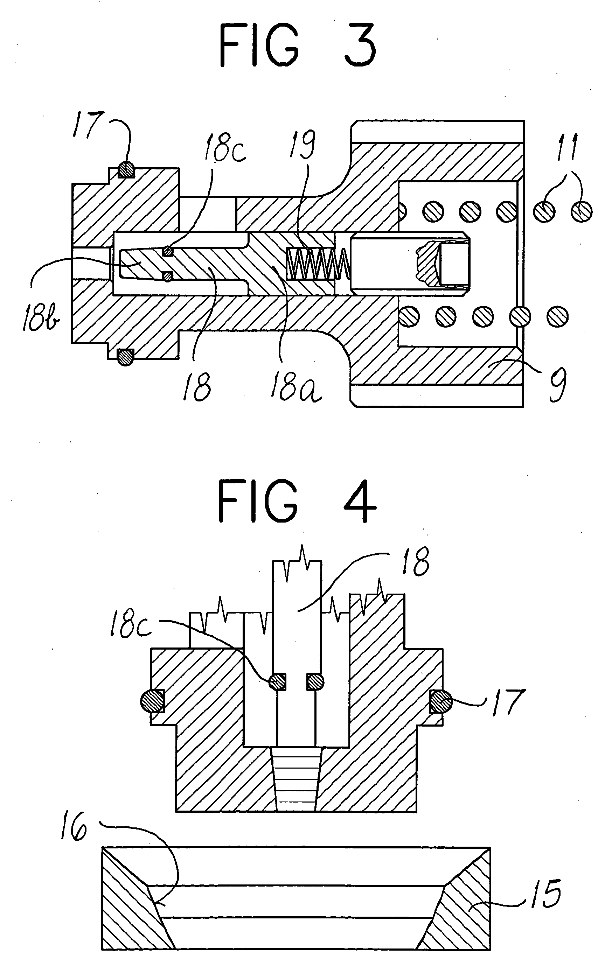

Figure 3 is an enlarged-scale sectional side view, taken along a diametrical line, of the flow control element of the valve according to the present invention;
Figure 4 is a further enlarged sectional side view, taken along a vertical line, of the end of the single-pin flow control element;
Figures 5 and 6 are side views, in successive operating configurations, of the end of the flow control element in the version provided with two parallel pins;
Figure 7 is a view, in successive positions a, b, c, d and e, of the pin with flow-rates that correspond to 0, 10, 20, 90, 200 liters/hour;
Figure 8 is a sectional side view of an automatic valve according to the invention in another alternative embodiment.

With reference to the figures, the letter V generally designates an automatic valve with pressure-dependent variable flow-rate, particularly for feeding heat exchangers for vehicle climate control systems, according to the invention.

The valve V comprises an elongated tubular body 1, which has, at one end, an end face 2 provided with a port 3 for connection to a duct for feeding pressurized fluid, the flow of which is shown schematically by means of white arrows and constitutes a first chamber I.

The body 1 has an outlet 4, which is preferably radial but can also be orientated along the axis, with a corresponding connector or manifold 5, which is L-shaped in the illustrated example, for conveying the fluid away toward an exchanger.

At the other end, the body 1 has an end face 6, which is provided with a connector 7 that is connected to a tube or a hole of the outlet of the connector 5 in order to have a pressure in the second chamber II that is slightly lower than the pressure of the first chamber I: the reference numeral 8 generally designates a flow control element, which has a cylindrical base 9 provided with at least two optional seats for at least two sealing rings 10 of the type known as O-ring or with lip-type gaskets for sliding mounting in the body 1 in contrast with elastic means constituted by a helical compression spring 11, which is suitable to push the expanded and contoured head 12 of the flow control element into the configuration for closing the port of the duct 3.

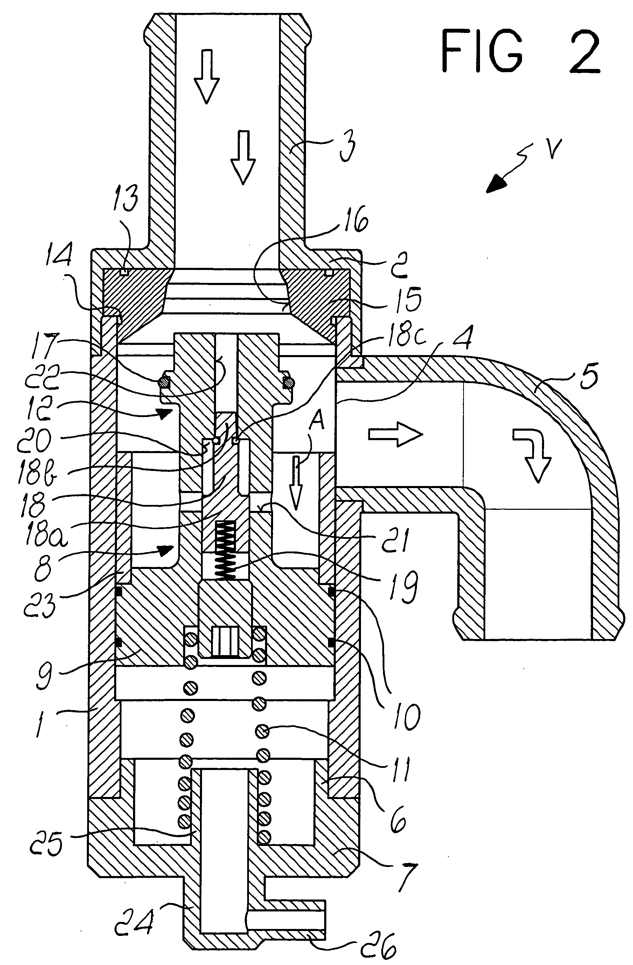

A collar 15 is clamped and sealed, by means of sealing rings 13 and 14, between the end of the body 1 and the end face 2 and forms internally a substantially frustum-shaped contoured seat 16: the head 12 of the flow control element has an outer surface that is shaped complementarily and is affected by an annular slot for accommodating a sealing gasket 17 of the type known as O-Ring in order to define, when the flow control element moves, as shown by the arrow A, a gradually larger fluid passage gap. The piston can be sealed, see the detail 8 of Figure 2, by means of an O-Ring whose seat is preferably formed in the body of the piston or even in the head thereof.

The reference numeral 18 designates a pin, in which the larger-diameter body 18a is mounted so that it can slide in contrast with elastic means 19 in a longitudinal hole 20 of the flow control element that is connected to a radial hole 21 located to the rear of the head 12.

The head 12 of the flow control element is crossed by an axial hole 22, in which the narrower end portion 18b of the pin, provided at its base with the seat for a sealing gasket 18c, is inserted.

The elastic means 11 and 19 are suitable to open, as the pressure increases, first the hole 22 and then the duct in proportion to the incident pressure.

In order to balance the flow of the liquid through the gaps formed in the valve, a cylindrical diaphragm 23 is mounted on the base 9 of the flow control element and can move with it; the diaphragm is suitable to throttle, in accordance with the movements of the flow control element, the outlet of the fluid 4 proportionally to the aperture of the gap for the passage of the fluid between the seat 16 and the outer surface of the head 12: when the flow control element is in the closed configuration, the diaphragm 23 leaves open a narrow gap L that ensures the correct flow of the liquid through the hole 22.

The end face is provided axially with a tubular connector 24 which, inside the body 1, continues with a portion 25 that acts as a guide for the spring 11, while it forms a bend on the outside and ends with a portion 26 that can be connected to the system (outlet 5 of Figure 2) in order to ensure that a given operating pressure is maintained.

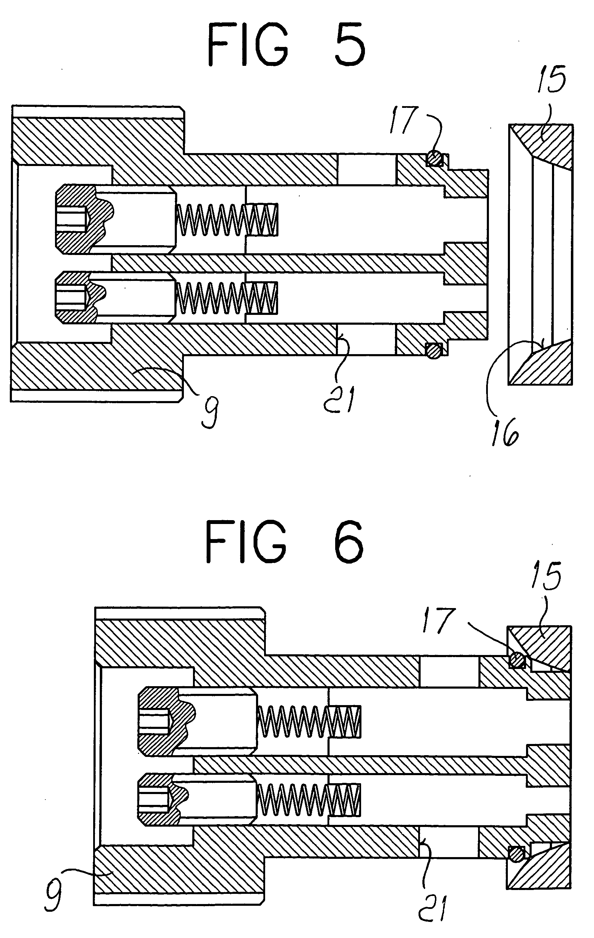

Figures 5 and 6 illustrate, in closed and open configurations, a flow control element according to an embodiment that has two or more parallel pins with diameters that are slightly different one another.

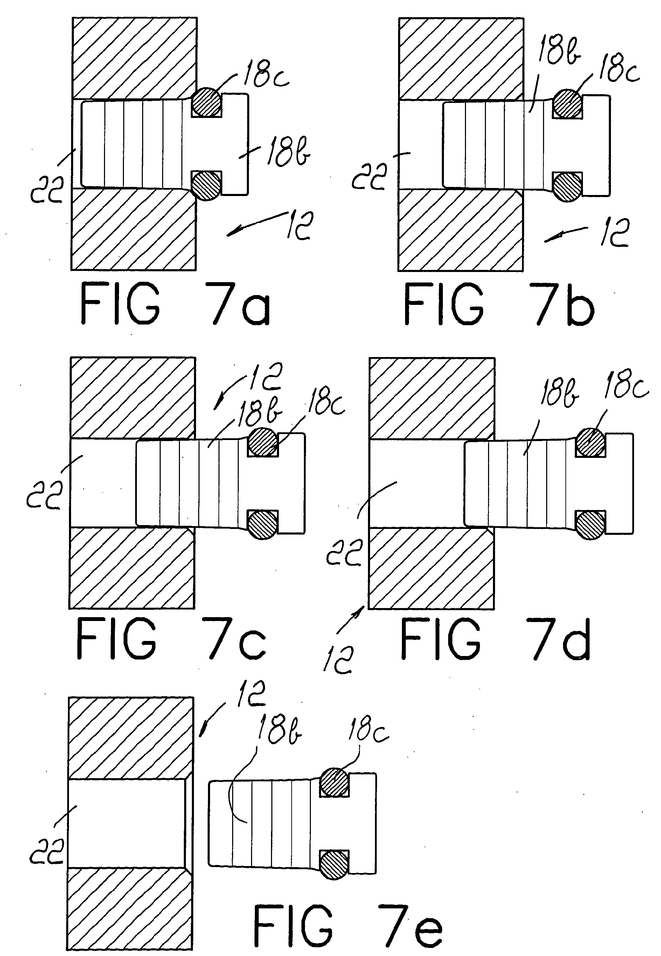

Internally, the hole is substantially frustum-shaped, and the outer surface of the pin coupled to said hole is shaped complementarily in order to form, when the pin moves, a gradually larger fluid passage gap (see Figure 7).

The operation of the valve according to the present invention is as follows: during initial opening, with relatively low flow-rates and pressures, the pin 18 opens (providing a small liquid passage gap); when instead the motor requires greater cooling, the pump yields a flow at a higher pressure and the flow control element 8 is opened (opening a larger liquid passage gap).

The valve according to the invention is used advantageously to economize the consumption of current of the pump for feeding the cooling liquid.

The direct-current feeder pump, depending on the power supply voltage, increases or decreases the rpm rate, varying the flow-rate and the pressure: at a low rpm rate with consequent small flow-rates, only the radiating mass of the heating circuit of the vehicle increases; with larger flow-rates, the valve opens, allowing the motor liquid to pass over the cooling radiator.

It has thus been shown that the invention achieves the intended aim and objects, and in particular that the ratio between the values of the pressure and the values of the flow of fluid is kept substantially constant at high and low pressures.

The invention thus conceived is susceptible of numerous modifications and variations, all of which are within the scope of the appended claims.

All the details may further be replaced with other technically equivalent ones.

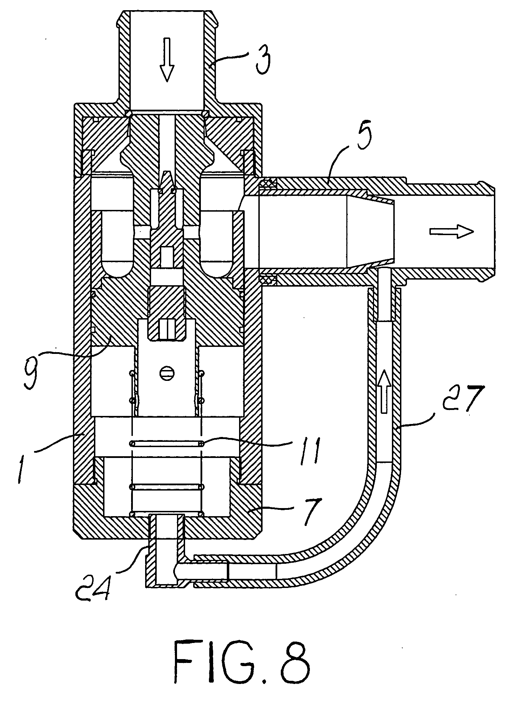

The valve according to the invention can be provided with a Venturi tube, which is located inside the manifold 5 and is connected to the outlet 26 by a tube 27 (Figure 8). The Venturi tube facilitates the opening of the valve when high flow-rates with reduced pressure increments are required.

In practice, the materials employed, as well as the shapes and the dimensions, may be any according to requirements without thereby abandoning the scope of the protection of the appended claims.

The disclosures in Italian Utility Model Application No. BO2001U000059 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic valve with pressure-dependent variable flow-rate, particularly for feeding heat exchangers for vehicle climate control systems, **characterized in that** it comprises: an elongated tubular body (1), in which one end (2) is provided with a port (3) for connection to a duct for feeding a pressurized fluid and has an outlet; a flow control element (8), which is mounted so that it can slide in said body (1) in contrast with elastic means (11) that are suitable to push the contoured head (16) of the flow control element (8) into a configuration for closing the port (3) of said duct; at least one pin (18), which is mounted so as to slide in contrast with elastic means (19) in a corresponding front longitudinal hole (20,22) of said flow control element that is connected to a radial hole (21) that lies to the rear of said contoured head (12); said elastic means being suitable to open, as the pressure increases, first the hole (20,22) and then the duct.

2. The valve according to claim 1, **characterized in that** the other end of said body (1) is closed hermetically by an end face (6).

3. The valve according to claim 1, **characterized in that** said tubular body (1) forms internally a contoured seat that is substantially frustum-shaped, and **in that** the outer surface of the head (12) of the flow control element (8) is shaped complementarily so as to provide, when the flow control element (8) moves, a gradually larger fluid passage gap.

4. The valve according to claim 3, **characterized in that** between the back of the flow control element (8) and said end face (6) there are interposed said elastic compression means (11), suitable to push said complementarily shaped end into the configuration for blocking said gap.

5. The valve according to one or more of the preceding claims, **characterized in that** said hole is substantially frustum-shaped internally and **in that** the outer surface of the pin (18) that is coupled to said hole (21) is shaped complementarily so as to produce, when the pin moves, a gradually larger fluid passage gap.

6. The valve according to one or more of the preceding claims, **characterized in that** a cylindrical diaphragm (23) is mounted on the base (9) of the flow control element (8) and can move with it, said diaphragm (23) being suitable to throttle the fluid outlet proportionally to the opening of the fluid inlet (4).

7. The valve according to one or more of the preceding claims, **characterized in that** in the manifold (5) there is a Venturi tube, which is connected to the output of the system and is suitable to facilitate the opening of the valve for large flow-rates and low pressure increases.
